# EUROPEAN PATENT APPLICATION

(11) **EP 4 668 173 A1**
(43) Date of publication of application: **24.12.2025**
(21) Application number: 23924326.4
(22) Date of filing: 26.10.2023
(51) Int. Cl.: G06N 10/60, G06N 10/20, G06N 3/063, G06N 3/048, G06F 17/16, G06F 17/18, B82Y 10/00

(54) **QUANTUM MATRIX OPERATOR AND QUANTUM MATRIX OPERATION METHOD FOR ARTIFICIAL NEURAL NETWORK**

(30) Priority: 20.02.2023 KR 20230022304
(71) Applicant: LG Electronics Inc., Yeongdeungpo-gu Seoul 07336 (KR)
(72) Inventor: PARK, Chanshin, Seoul 06772 (KR); CHA, Hyukgeun, Seoul 06772 (KR); LEE, Hyunchul, Seoul 06772 (KR)
(74) Representative: Schott, Jakob Valentin
(86) International application number: PCT/KR2023/016743
(87) International publication number: WO 2024/177219

(57) **Abstract**

The present invention pertains to a quantum matrix operator and a quantum matrix operation method for an artificial neural network, the operator comprising: a quantum embedding circuit for converting input data and weight values stored in a memory into quantum states; a quantum inner product circuit for performing the operation of matrix multiplication by using the quantized values; and a quantum activation function circuit for converting the results of the matrix multiplication into values before quantization to reflect the weight values.

## Description

### Technical Field

The disclosure relates to a quantum matrix operator and a quantum matrix operation method for an artificial neural network.

### Background Art

Recently, artificial neural networks, which are configured to process various information in a similar way to the human brain by imitating the way the human brain recognizes patterns, are being applied and used in numerous fields.

These artificial neural networks require learning based on massive amounts of data, and in the process, they must perform a large number of addition and multiplication operations. Accordingly, a chip structure which performs operations for artificial neural networks must include a plurality of operation circuits, such as a multiply-accumulate operator (MAC).

Therefore, a new type of hardware accelerator field specialized in deep learning of artificial neural networks has recently attracted much attention.

Deep learning accelerators have been proposed in different forms depending on usage environments and purposes. For example, graphics processing units (GPUs) are mainly used in servers or workstations which prioritize performance, while dedicated hardware, for example, neural processing units (NPUs), which are designed using field programmable gate arrays (FPGAs) or application specific integrated circuits (ASICs) are mainly used in edge devices, such as smartphones, which prioritize low power consumption.

However, many accelerators released to date lack the flexibility to respond to various types of layers or tensors used in various artificial neural networks due to the characteristics of dedicated hardware. These shortcomings are problematic in view of causing difficulty in supporting a variety of deep learning applications and models currently in use.

The variable use of a plurality of operation devices makes control circuits complex, and thereby, some operation devices may remain idle without being used during operations of artificial neural networks. This can cause inefficiency and additional unnecessary power consumption.

Prior art document 1 (Publication No. 10-2021-0014897, published on February 10, 2021) relates to a matrix operator and matrix operation method for an artificial neural network.

Prior art document 1 provides a matrix operator, which can increase operation efficiency and reduce power consumption by simultaneously performing multiplication and addition in parallel according to a pipeline technique, and a matrix operation method, thereby reducing the number of addition operations through an accumulator.

However, according to Prior art document 1, as the number of parameters of an artificial neural network increases, the size of a matrix required for operations increases proportionally. Thus, as the number of elements of a matrix required for parallel processing increases, the number of PEs and accumulators must increase, and the number of pipelines (SIMDL) also increases. To process hundreds of billions of parameters, thousands to tens of thousands of matrix operations are required. During the parallel operation process for the matrix operations, bottlenecks can occur, and even during parallel processing, unit processing times can increase, thereby inevitably extending an overall operation time.

Prior art document 1 only accelerates a matrix multiplication operation through a parallel operation (algorithm), while the disclosure can provide a new matrix operation method of acquiring a high-dimensional parallel matrix weighted sum only by executing circuits in a new operation manner, which does not require sub-modules, such as multipliers/adders/accumulators of existing classical computers and uses the unique characteristics of quantum, by using a matrix multiplication operation technique through a quantum superposition and a quantum inner product circuit.

Prior art document 2 (Publication No. 10-2021-0137772, published on November 18, 2021) relates to a quantum computation optimization device and method.

Prior art document 2 defines an optimization process of quantum computation for arbitrary problems. When any code is given, the corresponding operation process can be divided into blocks and block modules capable of performing the quantum operation can be classified for reuse. A quantum computation identification module determines whether to process the classified quantum operation blocks through a quantum simulation or a quantum computer, based on metrics, such as TEPTs (an estimated processing time of a quantum computer), and TEEA (an estimated error amount of a quantum computer) and reference values.

However, in Prior art document 2, specific processes of actual quantum computation are omitted and are only defined abstractly. Prior art document 1 does not specifically specify types of codes which can be calculated by a quantum computer or solution effects for the codes.

Prior art document 2 discloses a technique of simply dividing operation units into blocks to increase reusability and classifying simulator and hardware operations, whereas the disclosure explicitly specifies an operation method, so as to secure the inventive step due to the effects or influences of quantum computing, and to be commonly usable in any quantum environments regardless of the simulator or hardware.

### Disclosure of Invention

### Technical Problem

The disclosure aims to solve the above-mentioned problems and other drawbacks, and an aspect of the disclosure is to provide a matrix operator for an artificial neural network, which is capable of executing quantum matrix multiplication in an optimized manner, and a matrix operation method.

### Solution to Problem

According to one aspect of the disclosure to achieve the above or other purposes, a quantum matrix operator according to an embodiment of the disclosure includes a quantum embedding circuit configured to convert weight values and input data stored in a memory into quantum states, a quantum inner product circuit configured to perform a matrix multiplication using quantized values, and a quantum activation function circuit configured to reflect the weight values by converting results of the matrix multiplication into values before quantization.

In an embodiment, the quantum embedding circuit can convert the weight values and input data stored in the memory into quantum superposition states to enable quantum operations.

In an embodiment, the quantum inner product circuit can perform the matrix multiplication on the quantized values and outputs results of the matrix multiplication based on probability distributions.

In an embodiment, the quantum activation function circuit can apply a non-linear activation function of an artificial neural network.

In an embodiment, the quantum activation function circuit can use a repeat until success (RUS) circuit.

In an embodiment, the quantum embedding circuit can split weight matrices of an artificial neural network model for each layer.

In an embodiment, the quantum embedding circuit can perform quantum embedding for the weight matrices split for each layer.

In an embodiment, the quantum embedding circuit can determine whether a layer to be processed through the quantum embedding is a last layer, and perform different processing depending on whether the layer is the last layer.

In an embodiment, the quantum embedding circuit can perform the quantum embedding for result values of a previous layer in case that the layer to be processed through the quantum embedding is not the last layer.

In an embodiment, the quantum embedding circuit can store final results in case that the layer to be processed through the quantum embedding is the last layer.

In an embodiment, the quantum matrix operator can further include a post-processing module configured to process result values measured through quantum operations, and the post-processing module can process the result values measured through the quantum operations, and transmit the processed result values to the quantum activation function circuit.

In an embodiment, the quantum matrix operator can further include a buffer configured to apply matrix data with weights reflected in the quantum activation function circuit to a memory.

### Advantageous Effects of Invention

According to the disclosure, in the disclosure, data and artificial neural networks (matrices) can be processed through a quantum matrix multiplication with the number of qubits according to a linear function even when the amplitudes of the data and artificial neural networks (matrices) increase exponentially, and thus is expected to be effective for large-scale parallel processing.

In particular, the quantum matrix multiplication is expected to become an essential element in the development of super-large-scale artificial intelligence, which has recently been expanding into various forms.

### Brief Description of Drawings

FIG. 1 is a block diagram of a quantum matrix operator according to an embodiment.
FIG. 2 is a flowchart of a quantum matrix operation method according to an embodiment.
FIGS. 3, 4, 5, 6, 7, 8, and 9 are conceptual views of the quantum matrix operation method shown in FIG. 2.

### Mode for the Invention

It should be noted that the technical terms used in this specification are only used to describe specific embodiments and are not intended to limit the present disclosure. A singular representation used herein can include a plural representation unless it represents a definitely different meaning from the context. In general, a suffix such as "module" and "unit" can be used to refer to elements or components. Use of such a suffix herein is merely intended to facilitate description of the specification, and the suffix itself is not intended to give any special meaning or function.

In this application, the terms "comprising" and "including" should not be construed to necessarily include all of the elements or steps disclosed herein, and should be construed not to include some of the elements or steps thereof, or should be construed to further include additional elements or steps.

In describing the present disclosure, if a detailed explanation for a related known function or construction is considered to unnecessarily divert the gist of the present disclosure, such explanation has been omitted but would be understood by those skilled in the art.

Furthermore, the accompanying drawings are provided only for a better understanding of the embodiments disclosed herein, and are not intended to limit the technical ideas disclosed herein. Therefore, it should be understood that the accompanying drawings include all modifications, equivalents, and substitutions within the scope and technical ideas of the disclosure. It should also be understood that each of embodiments described below and combinations of those embodiments are all changes, equivalents, or substitutes which can belong to the idea and scope of the disclosure.

Hereinafter, the configuration and operation of the disclosure will be described in more detail with reference to a number of drawings related to the disclosure.

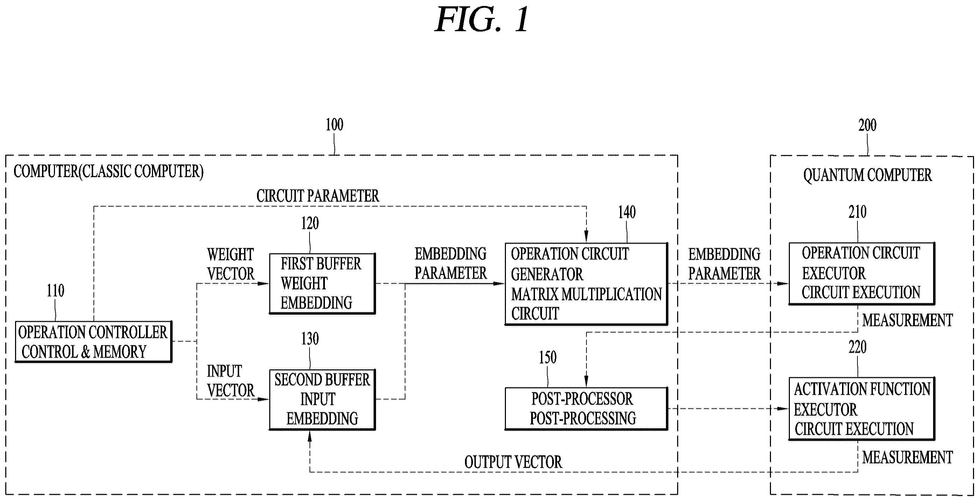

FIG. 1 is a block diagram of a quantum matrix operator according to an embodiment.

Referring to FIG. 1, a quantum matrix operator according to the disclosure can include a computer 100 (or a computing device) and a quantum computer 200 (or a quantum computing device).

For convenience of explanation, in this specification, the quantum matrix operator is described as including each of a computer and a quantum computer, but the quantum matrix operator can be implemented as a single device including components of the computer and the quantum computer.

With the advent of super-large-scale artificial intelligence, a key element emerged from artificial neural network learning/processing is an operation technique which can secure the time available for execution in line with the increase in the number of parameters due to the increase in complexity of artificial intelligence models.

Quantum computing is an innovative information processing technique, which reflects the unique characteristics of quantum computing, unlike accelerators, such as GPUs and TPUs (ASIC elements) developed within the framework of existing classical computing, and has the scalability to process hundreds of millions of data in parallel with dozens of qubits.

In the prior art, various types of specialized hardware accelerators (GPUs and TPUs) and parallel processing techniques have been introduced to accelerate deep learning of artificial neural networks, but it is still difficult to secure usable learning and inference times due to the exponentially increasing number of parameters and data expansion.

Existing parallel matrix operation processing techniques focus on supporting parallel processing by architecturally expanding circuits or algorithmically reducing computational quantities through accumulators, but are insufficient to cope with the exponential increase in operations.

Researches on new types of operation techniques using quantum computing are active, but are limited to somewhat abstract definitions of techniques without specifying specific utilizing methods.

The disclosure can provide a quantum matrix operator, which is capable of performing large-scale parallel processing by processing data and artificial neural networks (matrices) with the number of qubits according to a linear function even when the amplitudes of data and artificial neural networks increase exponentially, and a quantum matrix operation method.

An artificial neural network described herein can representatively include a convolutional neural network (CNN).

To this end, a computer 100 included in a quantum matrix operator according to the disclosure can include an operation controller 110, a first buffer 120, a second buffer 130, an operation circuit executor 140, and a post-processor 150.

A quantum computer 200 included in the quantum matrix operator according to the disclosure can include an operation circuit executor 210 and an activation function executor 220.

The components described above can be used as modules of an artificial neural network.

The operation controller 110 receives a plurality of matrices, which are applied to be operated on each layer of the artificial neural network. The plurality of matrices to be operated can be at least one feature map (or input image) applied to the layer and at least one kernel assigned to each layer.

The operation controller 110 selects two matrices to be operated from among the plurality of applied matrices, and transmits the two selected matrices together with an operation instruction to the first buffer 120 and the second buffer 130.

For example, a multiplicand matrix for at least one feature map applied to a layer of an artificial neural network can be applied to the first buffer 120, and a multiplier matrix for a kernel assigned to the layer of the artificial neural network can be applied to the second buffer 130.

The operation controller 110 can receive matrix operation execution results from the operation circuit generator 140, transmit the received matrix operation execution results to a memory (not shown), and store the received results in the memory.

The operation controller 110 applies the selected matrices together with the operation instruction to perform a matrix multiplication by selecting an element of each matrix based on a matrix multiplication algorithm according to an embodiment to be described below.

The first buffer 120 selects elements in column units from the multiplicand matrix applied by the operation controller 110 according to the operation instruction, and transfers the elements to the operation circuit generator 140. The second buffer 130 selects elements in row units from the multiplier matrix applied according to the operation instruction and transfers the elements to the operation circuit generator 140.

For example, the operation circuit generator 140 can include a plurality of single instruction multiple data lanes (SIMDLs). Each of the SIMDLs can include a plurality of process elements PE and an SIMD unit (SIMDU).

In recent years, matrix operators have generally employed a single instruction multiple data (SIMD) technique to process complex operations in batches utilizing a single instruction to improve operational efficiency. The SIMD technique is mainly used in vector processors, in which a plurality of process elements PE apply the same (or similar) operation to a plurality of data and process the plurality of data simultaneously.

In the SIMD technique, a plurality of instruction sets for processing a plurality of data with a single instruction are stored to maximize efficiency of commands. Each stored instruction set is used to perform operations in parallel simultaneously for the plurality of process elements PE using data level parallelism (DLP). For example, the SIMDU allows the plurality of process elements PE to perform the same assigned operation in parallel for the elements, which are applied in units of rows or columns from the first and second buffers 120 and 130.

Here, the SIMD unit SIMDU can be implemented as hardware inside the operation circuit generator 140, but can also be implemented as software which assigns operations performed in the operation circuit generator 140. In some cases, the SIMD unit SIMDU can be implemented inside the operation controller 110.

Each of the plurality of process elements PE receives elements, which are to be operated on each other among the elements of the multiplicand matrix and the elements of the multiplier matrix, from the first and second buffers 120 and 130, and performs multiplication or addition for the corresponding elements. Each of the plurality of process elements PE can be implemented as a multiply-accumulate operator (MAC).

In some embodiments, a quantum matrix operator according to the disclosure can include a quantum embedding circuit which converts weight values and input data (including result values of a previous step) of an artificial neural network into quantum states, a quantum inner product circuit which performs quantum matrix multiplication, and a quantum activation function circuit.

The quantum embedding circuit can be generated in the operation circuit generator 140 (or the operation circuit executor 210).

The quantum embedding circuit can play a role in converting weight values and input data stored in the memory into quantum superposition states to enable quantum operations.

The operation circuit executor 210 can generate and execute the quantum inner product circuit (or quantum matrix multiplication circuit) which performs matrix multiplication using quantized values.

The quantum inner product circuit can be generated in the operation circuit executor 210 (or the operation circuit generator 140).

The quantum inner product circuit is a circuit which performs the matrix multiplication based on the quantized values, and can output results based on probability distributions through measurement or in a specific state.

The quantum inner product circuit can convert operation results (on the basis of the probability distributions) into original values, and pass the converted operation results through the quantum activation function circuit (or the quantum activation circuit), thereby reflecting the characteristics of originally learned weights.

The quantum activation function circuit can be generated and/or executed by the activation function executor 220, and can play a role in reflecting weight values by converting results of the matrix multiplication into values before quantization.

The operation controller 110 can control the entire circuit configuration.

The buffers 120 and 130 can receive matrix data from the memory.

The post-processor 150 (or post-processing module) can process result values measured through quantum operations.

The quantum embedding circuit 140 can convert weight values and input data stored in the memory into quantum superposition states to enable quantum operations.

The quantum inner product circuit 210 can perform the matrix multiplication with respect to the quantized values, and output results based on the probability distributions.

The quantum activation function circuit 220 can apply a non-linear activation function of an artificial neural network. As an example, the quantum activation function circuit can utilize a repeat until success (RUS) circuit.

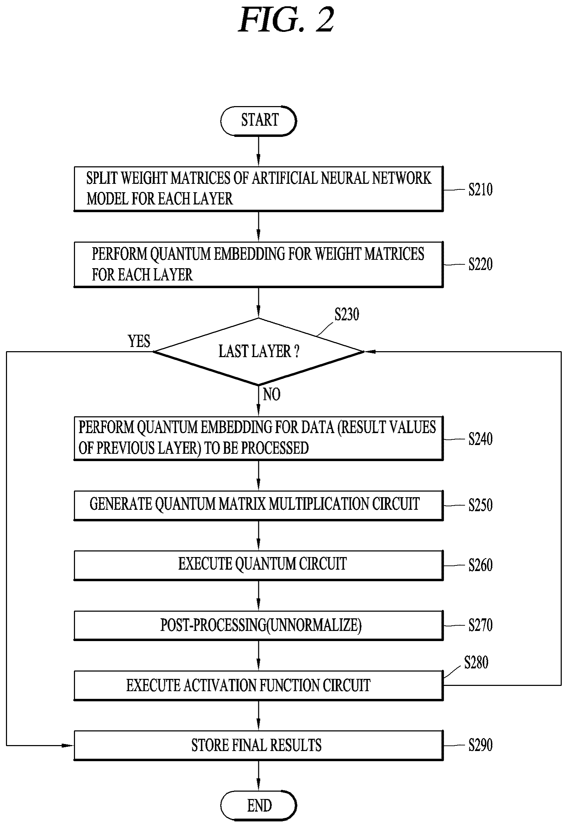

FIG. 2 is a flowchart of a quantum matrix operation method according to an embodiment.

Referring to FIG. 2, a quantum matrix operation method according to an embodiment of the disclosure can include splitting by a quantum embedding circuit weight matrices of an artificial neural network model for each layer (S210).

The quantum embedding circuit can perform quantum embedding for the weight matrices split for each layer (S220).

Thereafter, the quantum embedding circuit can determine whether or not a layer to be processed through the quantum embedding is the last layer, and perform different processing depending on whether the layer is the last layer or not (S230).

For example, the quantum embedding circuit can perform the quantum embedding for result values of a previous layer in case that the layer to be processed through the quantum embedding is not the last layer (S240).

Thereafter, the operation circuit executor 210 (or the operation circuit generator 140) can generate a quantum inner product circuit (a quantum matrix multiplication circuit) (S250) and execute the quantum circuit with respect to layers which have been processed through the quantum embedding (S260).

As described above, the quantum matrix operator according to the disclosure can further include a post-processing module 150 which processes result values measured through quantum operations.

The post-processing module 150 can process the result values measured through the quantum operations and transmit the processed result values to the quantum activation function circuit 220 (S270).

The quantum activation function circuit 220 included in the activation function executor 220 can execute the activation function circuit with respect to the transmitted result values (S280) and store final results in the memory (S290).

In another embodiment, in case that the layer to be processed through the quantum embedding is the last layer, the quantum embedding circuit can store the final results (S290).

The buffer (for example, the second buffer 130) can apply matrix data, to which weights are reflected in the quantum activation function circuit, to the memory.

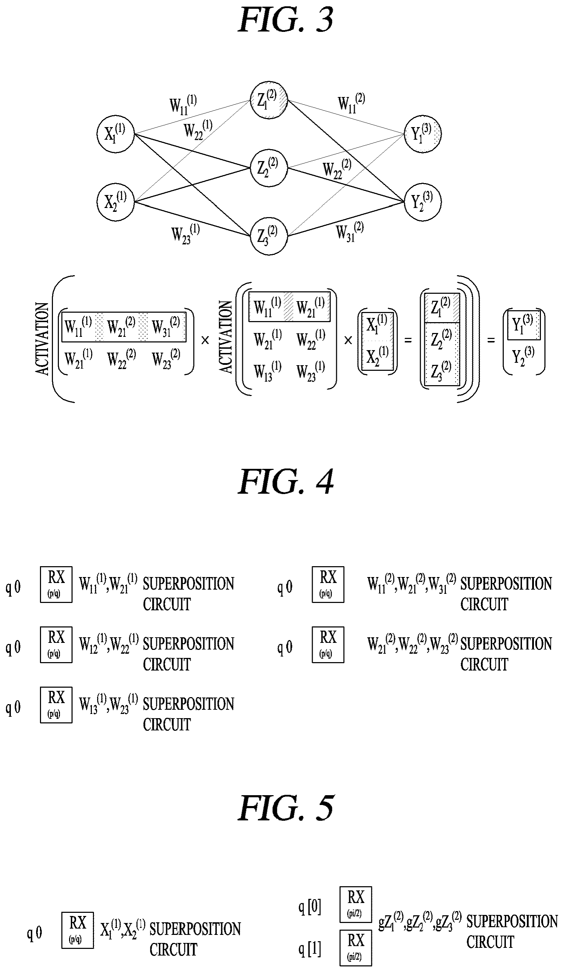

FIGS. 3, 4, 5, 6, 7, and 8 are conceptual views of the quantum matrix operation method shown in FIG. 2.

FIG. 3 is a view of an example of an artificial neural network and an operation process.

FIG. 4 is a view of a circuit which performs quantum embedding with respect to weight matrices.

FIG. 5 is a view of a circuit which performs quantum embedding with respect to input (data) matrices.

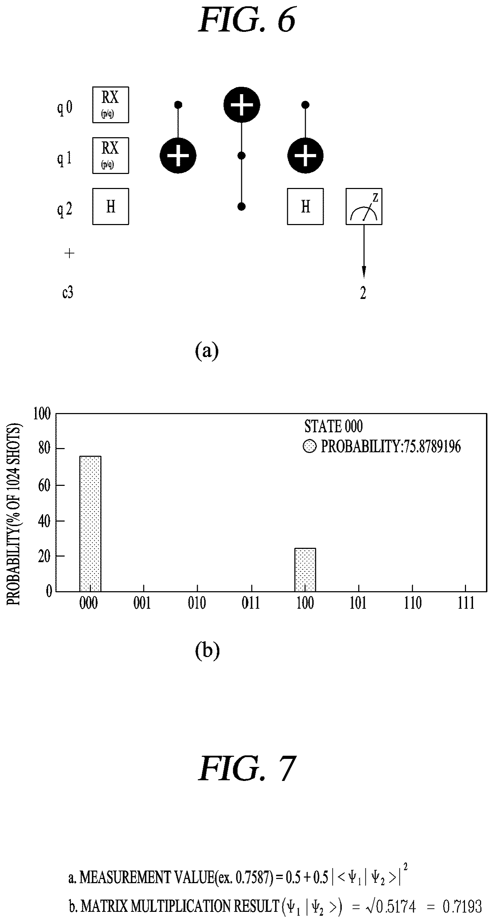

FIG. 6 is a conceptual view of an example of a quantum inner product circuit (quantum matrix multiplication circuit).

FIG. 7 is a view of post-processed result values.

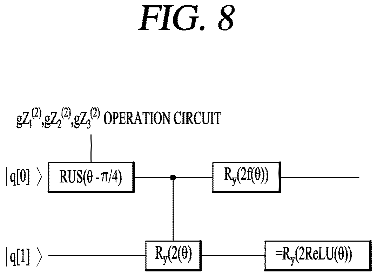

FIG. 8 shows an example of the quantum activation function circuit (the quantum activation circuit), and the circuit of FIG. 8 is, for example, an RUS circuit.

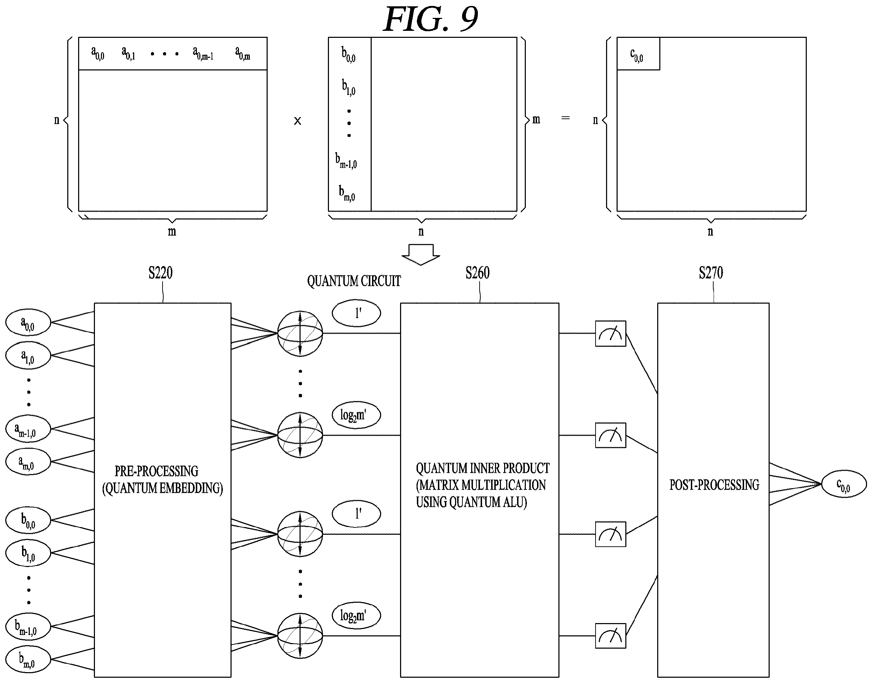

FIG. 9 is a view of a quantum matrix multiplication operation according to the disclosure.

According to the disclosure, quantum embedding can be performed on matrix A (a_0,0, a_1,0, ..., a_0,m) and matrix B (b_0,0, ..., b_m,0), a matrix multiplication can be performed using quantized values in a quantum inner product circuit of a quantum circuit, which performs the quantum matrix multiplication, and a result value C_0,0 to which weights are reflected can be output as a result value through post-processing and a quantum activation function circuit.

In case of Prior art patent document named "Matrix operator and matrix operation method for artificial neural network," the size and complexity of a circuit increase in proportion to the size (the number of parameters) of an artificial neural network, whereas a technique using a quantum computer according to the disclosure can simultaneously process data of powers of 2n in parallel with n qubits. Thus, in the disclosure, it can be understood that the technique according to the disclosure provides a groundbreaking structure in terms of expansion and processing complexity.

Compared to another Prior art patent document named "Quantum computation optimization device and method," which provides an abstract definition that inputs are received as random codes and classified into block units to increase reusability, and a quantum simulation SW and a quantum computer HW are processed by being distinguished from each other, the disclosure can provide a technique which can be generally applied regardless of the quantum simulation SW or the quantum computer HW.

In summary, the process of performing the quantum matrix multiplication according to the disclosure has the characteristics in view of 1) amplitude/basic embedding, 2) quantum inner product (SWAP test)/quantum arithmetic with the quantum Fourier transform, and 3) quantum activation circuit (repeat-until-success (RUS) circuit).

First, a technique of performing quantum embedding is amplitude embedding, which is a technique of mapping probability distributions (amplitudes) through measurement and input data amplitudes directly into quantum states, and performing quantum arithmetic operations on powers of large-scale data.

Second, a quantum inner product circuit (quantum matrix multiplication circuit) can utilize a method, which uses the quantum inner product circuit (using the probability distributions of measurement results), and a matrix multiplication (weighted sum) technique using quantum Fourier transformation, which is a technique of applying discrete Fourier transform using a quantum phase.

Third, a quantum activation function circuit (quantum activation circuit) can operate a non-linear activation function of an artificial neural network through a quantum circuit (repeat-until-success (RUS)).

Accordingly, in the disclosure, data and artificial neural networks (matrices) can be processed through the quantum matrix multiplication with the number of qubits according to a linear function even when the amplitudes of the data and artificial neural networks (matrices) increase exponentially, and thus is expected to be effective for large-scale parallel processing. In particular, the quantum matrix multiplication is expected to become an essential element in the development of super-large-scale artificial intelligence, which has recently been expanding into various forms.

The disclosure can be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and can also be implemented in the form of a carrier wave (e.g., transmission over the Internet). The computer can also include a controller of a quantum matrix operator according to an embodiment of the disclosure.

Therefore, the detailed description should not be limitedly construed in all of the aspects, and should be understood to be illustrative. The scope of the present disclosure should be determined by reasonable interpretation of the appended claims, and all changes within the equivalent scope of the present disclosure are embraced by the appended claims.

## Claims

1. A quantum matrix operator comprising:
a quantum embedding circuit configured to convert weight values and input data stored in a memory into quantum states;
a quantum inner product circuit configured to perform a matrix multiplication using quantized values; and
a quantum activation function circuit configured to reflect the weight values by converting results of the matrix multiplication into values before quantization.

2. The quantum matrix operator of claim 1, wherein
the quantum embedding circuit converts the weight values and input data stored in the memory into quantum superposition states to enable quantum operations.

3. The quantum matrix operator of claim 1, wherein
the quantum inner product circuit performs the matrix multiplication on the quantized values and outputs results of the matrix multiplication based on probability distributions.

4. The quantum matrix operator of claim 1, wherein
the quantum activation function circuit applies a non-linear activation function of an artificial neural network.

5. The quantum matrix operator of claim 1, wherein
the quantum activation function circuit uses a repeat until success (RUS) circuit.

6. The quantum matrix operator of claim 1, wherein
the quantum embedding circuit splits weight matrices of an artificial neural network model for each layer.

7. The quantum matrix operator of claim 6, wherein
the quantum embedding circuit performs quantum embedding for the weight matrices split for each layer.

8. The quantum matrix operator of claim 7, wherein
the quantum embedding circuit determines whether a layer to be processed through the quantum embedding is a last layer, and performs different processing depending on whether the layer is the last layer.

9. The quantum matrix operator of claim 8, wherein
the quantum embedding circuit performs the quantum embedding for result values of a previous layer in case that the layer to be processed through the quantum embedding is not the last layer.

10. The quantum matrix operator of claim 8, wherein
the quantum embedding circuit stores final results in case that the layer to be processed through the quantum embedding is the last layer.

11. The quantum matrix operator of claim 9, further comprising
a post-processing module configured to process result values measured through quantum operations,
wherein the post-processing module processes the result values measured through the quantum operations, and transmits the processed result values to the quantum activation function circuit.

12. The quantum matrix operator of claim 1, further comprising
a buffer configured to apply matrix data with weights reflected in the quantum activation function circuit to a memory.
